# EUROPÄISCHE PATENTSCHRIFT

(11) **EP 1 888 928 B1**
(45) Veröffentlichungstag und Bekanntmachung des Hinweises auf die Patenterteilung: **16.01.2013**
(21) Anmeldenummer: 06743002.5
(22) Anmeldetag: 20.05.2006
(51) Int. Cl.: F16C 29/02

(54) **HYDROSTATISCHE LAGERUNG**
HYDROSTATIC BEARING
PALIER HYDROSTATIQUE

(30) Priorität: 25.05.2005 DE 102005023998
(43) Veröffentlichungstag der Anmeldung: 20.02.2008
(73) Patentinhaber: Schaeffler Technologies AG & Co. KG, 91074 Herzogenaurach (DE)
(72) Erfinder: RUDY, Dietmar, 66501 Kleinbundenbach (DE); BAUER, Wolfgang, 66292 Riegelsberg (DE)
(86) Internationale Anmeldenummer: PCT/EP2006/004796
(87) Internationale Veröffentlichungsnummer: WO 2006/125572

(56) Entgegenhaltungen:
- EP-A- 0 361 026
- EP-A- 0 931 949
- DE-C1- 3 831 676
- DE-C1- 3 917 673
- US-A- 5 980 110
- US-A- 6 012 845
- US-A1- 2004 042 689

## Beschreibung

Die vorliegende Erfindung betrifft eine hydrostatische Lagerung zur Aufnahme von horizontalen und vertikalen Kräften.

Aus DE 38 31 676 C1 beispielsweise ist eine hydrostatische Lagerung bekannt geworden, bei der ein Tragelement auf einer Führungsschiene hydrostatisch gelagert ist. Die Führungsschiene weist einen trapezförmigen Führungsabschnitt und einen trapezförmigen Befestigungsabschnitt auf. Die beiden Abschnitte sind mit ihren verjüngten Seiten einander zugewandt. Eine kopfseitige Führungsfläche des Führungsabschnittes und eine Befestigungsfläche des Befestigungsabschnittes sind voneinander abgewandt und parallel zueinander angeordnet. Seitliche Führungsflächen des Führungsabschnittes sind jeweils unter einem spitzen Winkel zu der oberen Führungsfläche angeordnet. Seitliche Fußflächen des Befestigungsabschnittes sind unter einem spitzen Winkel zu der Befestigungsfläche angeordnet. An beide Längsseiten oder Rändern der kopfseitigen Führungsfläche schließen die beiden seitlichen Führungsflächen des Führungsabschnittes an, wobei zwischen der seitlichen Führungsfläche und der kopfseitigen Führungsfläche ein Winkel eingeschlossen ist.

Das Tragelement weist zwei Schenkel und eine die beiden Schenkel verbindende Basis auf. Das Tragelement umgreift mit seinen beiden Schenkel die Führungsschiene. Die beiden Schenkel und die Basis welsen an ihren der Führungsschiene zugewandten Seiten jeweils eine hydraulisch beaufschlagbare Drucktasche zum Aufbau eines hydrostatischen Drucks zwischen der Führungsschiene und dem Tragelement auf.

Derartige hydrostatische Lagerung weisen im Vergleich zu den bekannten Linearführungen mit Wälzkörperrückführung geringere Tragzahlen auf. Bei Linearwälzlagern mit Wälzkörperrückführung werden die zu übertragenden Lasten zwischen dem Tragelement und der Führungsschiene über eine Vielzahl von Rollen übertragen, die an Laufbahnen der Führungsschiene und des Tragelementes unter Last abwälzen.

Aufgabe der vorliegenden Erfindung ist es, eine hydrostatische Lagerung nach dem Merkmalen des Oberbegriffs des Anspruchs 1 anzugeben, bei der die Tragfähigkeit verbessert ist.

Erfindungsgemäß wird diese Aufgabe dadurch gelöst, dass der Winkel α zwischen der kopfseitigen und der seitlichen Führungsfläche des Führungsabschnittes gleich oder größer als 35 ° und gleich oder kleiner als 75 ° ist, und dass der Winkel y zwischen der Befestigungsfläche und der seitlichen Fußfläche des Befestigungsabschnittes gleich oder größer als 10 ° und gleich oder kleiner als 25 ° ist.

Bei der hier vorgeschlagenen geometrischen Gestaltung der Führungsschiene und des Tragelementes hat sich überraschender Weise herausgestellt, dass die Tragfähigkeit im Vergleich zu der hydrostatischen Lagerung gemäß DE 38 31 676 C1 deutlich erhöht ist. Bei gleichem hydraulischen Druck werden höhere Tragzahlen im Vergleich zu der hydrostatischen Lagerung gemäß DE 38 31 676 C1 erzielt.

Die erfindungsgemäße hydrostatische Lagerung kann in ihrem Lichtraumprofil wie eine Standardprofilschienenführung nach DIN 645-1 ausgebildet werden. In der DIN 645 sind Anschlußmaße für die Führungsschiene und das Tragelement, sowie die äußeren Abmessungen des Systems beschrieben.

Ein Optimum für die Gestaltung und die Tragfähigkeit der erfindungsgemäßen hydrostatischen Lagerung ist erreicht, wenn der Winkel α zwischen der oberen und der seitlichen Führungsfläche des Führungsabschnittes 55 ° beträgt.

Die an der Basis des Tragelementes vorgesehene Drucktasche kann durch einen längs der Führungsschiene angeordneten Trennsteg unterteilt sein. Dieser Trennsteg kann an seiner der Führungsschiene zugewandten Seite mit einer Tragfläche zur Anlage an die Führungsfläche des Führungsabschnittes versehen sein. Bei dieser erfindungsgemäßen Weiterbildung ist eine Notlaufeigenschaft der hydrostatischen Lagerung gewährleistet. Wenn eine überhöhte Druckkraft senkrecht auf die obere Führungsfläche des Führungsabschnittes einwirkt, kann unter Umständen das zwischen der Führungsschiene und dem Tragelement eingestellte Druckpolster zusammengedrückt werden, so dass der Trennsteg mit seiner Tragfläche zur Anlage an die Führungsschiene gelangt. Diese Anlage ist derart beschaffen, dass ein weiteres Verfahren des Tragelementes auf der Führungsschiene möglich ist.

Vorzugsweise weist das Tragelement einen mit den Drucktaschen versehenen Tragkörper und zwei an beide Stirnseiten des Tragkörpers anschließende Kopfstücke auf. An die Drucktaschen anschließende Druckkanäle sind vorgesehen, die mit in wenigstens einem der beiden Kopfstücke vorgesehenen Drosseln oder Stromventilen zur Regulierung der Durchflußmenge von Hydraulikflüssigkeit versehen sind. Für eine einwandfreie Einstellung der hydrostatischen Lagerung kann der hydrostatische Druck in den drei Drucktaschen mittels der Drosseln oder Stromventile exakt eingestellt werden.

In günstiger Weise kann das Tragelement zusätzlich mit Rückführkanälen versehen sein, die in wenigstens einen der beiden Kopfstücke münden, wobei rücklaufende Hydraulikflüssigkeit über eine an dem Kopfstück vorgesehene Rückführungsstelle abgeführt werden kann. Zur besseren Ölrückführung kann zusätzlich eine Absaugpumpe angeschlossen werden.

Bei dieser erfindungsgemäßen Weiterbildung kann das Tragelement ferner mit zwei längs zu der Führungsschiene angeordneten Rückführkanälen versehen sein, die jeweils in einem von der Basis und jeweils einem der beiden Schenkel des Tragelementes gebildeten Eckbereichs angeordnet sind. In diesem Eckbereich kann der Rückführkanal als offene Nut ausgebildet sein, die an ihrer geöffneten Längsseite von der Führungsschiene begrenzt sein.

In diesem Fall ist es besonders günstig, wenn der Führungsabschnitt der Führungsschiene in seinem von der seitlichen Führungsfläche und seiner kopfseitigen Führungsfläche gebildeten Kantenbereich eine entlang der Führungsschiene erstreckte Abflachung aufweist, die den Rückführkanal begrenzt. Die Breite der Abflachung ist dann gerade so bemessen, dass die lichte Öffnungsbreite der offenen Nut weitgehend abgedeckt ist.

Das Tragelement kann an den freien Enden seiner beiden Schenkel jeweils mit einer Längsdichtung versehen sein, die an der Führungsschiene anliegt. Diese Längsdichtung kann in vorteilhafter Weise den Rückführungskanal für die Hydraulikflüssigkeit begrenzen.

Ferner kann das Kopfstück mit einer Frontdichtung versehen sein, die die Führungsschiene umgreift, und die an den seitlichen und der kopfseitigen Führungsfläche des Führungsabschnittes der Führungsschiene anliegt. In günstiger Weise kann diese Frontdichtung einen die Führungsschiene umgreifenden Sammelkanal begrenzen, über den Hydraulikflüssigkeit aus den Rückführkanälen in eine zentrale Rückführungsstelle des Kopfstückes geleitet wird.

Zwischen dem trapezförmigen Führungsabschnitt und dem trapezförmigen Befestigungsabschnitt kann ein Übergangsabschnitt vorgesehen sein, der den Befestigungsabschnitt einstückig mit dem Führungsabschnitt verbindet. Die Höhe dieses Übergangsabschnittes kann in Abhängigkeit der gewählten erfindungsgemäßen vorgeschlagenen Winkel variieren.

Der Übergangsabschnitt kann an seinen einander gegenüberliegenden Längsseiten mit geraden oder konkav gekrümmten Übergangsflächen versehen sein, die an die seitlichen Führungsflächen des Führungsabschnittes und an die seitlichen Fußflächen des Befestigungsabschnittes anschließen. Diese Übergangsflächen können als Anlageflächen für die bereits oben erwähnten Längsdichtungen des Tragelementes ausgebildet sein.

Nachstehend wird die Erfindung anhand eines in insgesamt fünf Figuren abgebildeten Ausführungsbeispieles erläutert. Es zeigen:
- Figur 1: eine perspektivische Darstellung einer erfindungsgemäßen hydrostatischen Lagerung,
- Figur 2: eine weitere perspektivische Darstellung der erfindungsgemäßen hydrostatischen Lagerung,
- Figur 3: eine Ansicht der erfindungsgemäßen hydrostatischen Lagerung,
- Figur 4: ein Einzelelement in perspektivischer Darstellung und
- Figur 5: einen Teillängsschnitt durch die erfindungsgemäße hydrostatische Lagerung.

### Ausführliche Beschreibung der Zeichnung

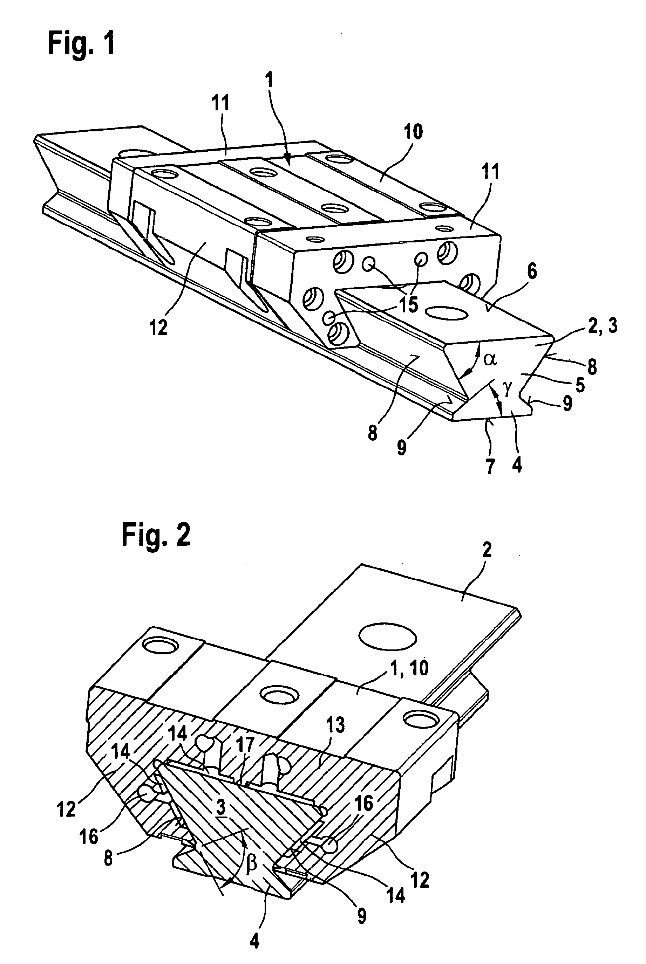

Die in den Figuren 1 und 2 abgebildete erfindungsgemäße hydrostatische Lagerung zeigt in perspektivischer Darstellung ein Tragelement 1, das auf einer Führungsschiene 2 längsverschieblich gelagert ist. Die Führungsschiene 2 ist in zwei Abschnitte unterteilt: Einen trapezförmigen Führungsabschnitt 3 und einen trapezförmigen Befestigungsabschnitt 4. Die beiden trapezförmigen Abschnitte 3, 4 sind mit ihren verjüngten Seiten einander zugewandt und mittels eines Übergangsabschnittes 5 einstückig miteinander verbunden.

Der Führungsabschnitt 3 weist eine kopfseitige Führungsfläche 6 auf. Eine fußseitige Befestigungsfläche 7 des Befestigungsabschnittes 4 ist parallel zu der kopfseitigen Führungsfläche 6 an der gegenüberliegenden Seite der Führungsschiene 2 ausgebildet. An beiden Längsseiten oder Rändern der kopfseitigen Führungsfläche 6 schließen seitliche Führungsflächen 8 an, wobei diese seitlichen Führungsflächen 8 mit einem Winkel α geneigt zur kopfseitigen Führungsfläche 6 angeordnet sind.

Der Befestigungsabschnitt 4 weist seitliche Fußflächen 9 auf, die unter einem Winkel γ zu der Befestigungsfläche 7 geneigt angeordnet sind.

Die Figur 2 zeigt zudem, dass die seitlichen Führungsflächen 8 des Führungsabschnittes 3 und die seitlichen Fußflächen 9 des Befestigungsabschnittes 4 sich unter einem Winkel β schneiden.

Das Tragelement 1 weist einen Tragkörper 10 auf, und zwei Kopfstücke 11, die an beiden Stirnseiten des Tragkörpers 10 angeordnet sind. Das Tragelement 1 weist zwei Schenkel 12 auf und eine die beiden Schenkel 12 verbindende Basis 13, wobei das Tragelement 1 mit seinen beiden Schenkeln 12 die Führungsschiene 2 umgreift.

In der Figur 2 ist der Tragkörper 10 quer geschnitten, wobei die beiden Kopfstücke 11 weggelassen sind. In dieser Darstellung sind deutlich Drucktaschen 14 erkennbar, die an beiden Schenkeln 12 und an der Basis 13 an ihren der Führungsschiene 2 zugewandten Seiten ausgebildet sind. Diese Drucktaschen 14 sind hydraulisch beaufschlagbar zum Aufbau eines hydrostatischen Drucks zwischen der Führungsschiene 2 und dem Tragelement 1

Bei dieser erfindungsgemäßen hydrostatischen Lagerung sind die beiden seitlichen Führungsflächen 9 des Führungsabschnittes 2 unter einem Winkel α gleich 55 ° zu der kopfseitigen Führungsfläche 6 des Führungsabschnittes 3 angeordnet. Bei dieser Neigung der Führungsflächen zueinander lassen sich erfindungsgemäß deutlich höhere Tragzahlen als bei bekannten hydrostatischen Lagerung erzielen. Dieser Winkel α kann wenigstens 35 ° und höchstens 75 ° betragen, wobei ein Optimum für die Tragfähigkeit mit 55 ° ermittelt wurde.

Die seitlichen Fußflächen 9 des Befestigungsabschnittes 4 sind unter einem Winkel zwischen 10 und 25 ° geneigt zur Fußseitigen Befestigungsfläche 7 des Befestigungsabschnittes 4 angeordnet. Mit den hier vorgeschlagenen Winkeln α und γ ergeben sich Winkel β zwischen den seitlichen Führungsflächen 8 und den seitlichen Fußflächen 9, die zwischen 45 und 100 ° angegeben werden können. Das Tragelement 1 weist eine Innenkontur auf, die der Außenkontur der Führungsschiene 2 angepaßt ist. Die Innenseiten der beiden Schenkel 12 sind zu der Innenseite der Basis 13 ebenfalls unter dem Winkel α der Führungsschiene 2 geneigt angeordnet.

Figur 1 zeigt an dem Kopfstück 11 vorgesehene Bohrungen 15, in die hier nicht abgebildete übliche Drosseln oder Stromventile eingesetzt sind. Diese Bohrungen 15 sind hydraulisch verbunden mit Druckkanälen 16, die an die Drucktaschen 14 angeschlossen sind. In der Figur 2 sind die in dem Tragkörper 10 vorgesehenen Druckkanäle im Schnitt abgebildet. Die Druckkanäle 16 werden mit Hydraulikflüssigkeit, beispielsweise Hydrauliköl beaufschlagt, wobei der Druck in den Drucktaschen 14 über eine Justierung der nicht abgebildeten Drosseln oder Stromventile genau eingestellt werden kann.

Die an der Basis 13 des Tragelementes 1 ausgebildete Drucktasche 14 ist durch einen längs der Führungsschiene 2 angeordneten Trennsteg 17 unterteilt. Jede abgeteilte Tasche ist an einen eigenen Druckkanal 16 hydraulisch angeschlossen.

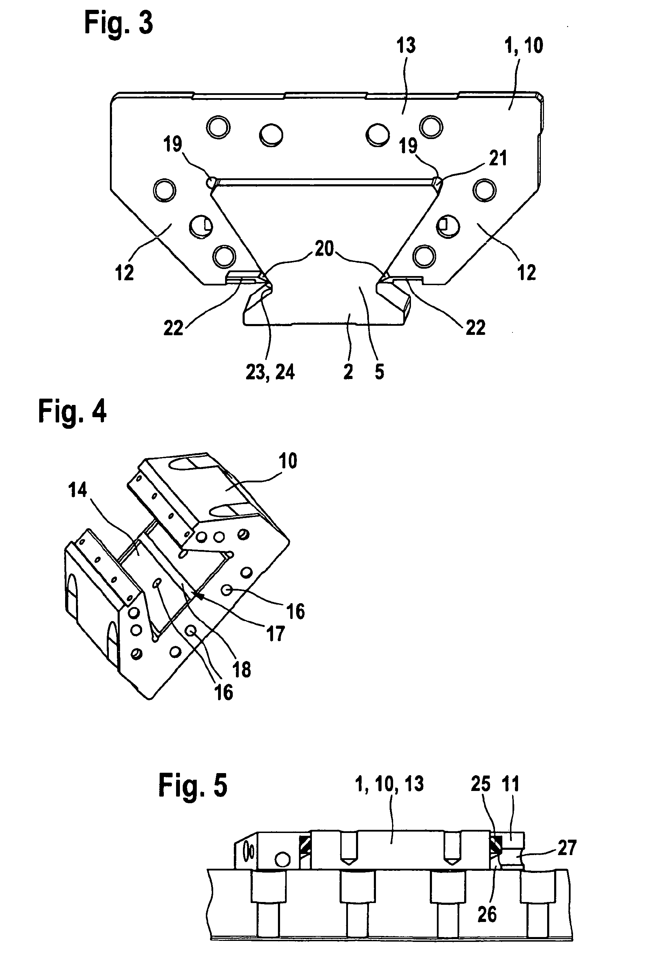

Diese an der Basis 13 ausgebildete Drucktasche 14 mit dem Trennsteg 17 ist deutlich in der Figur 4 erkennbar. Der Trennsteg 17 ist an seiner der Führungsschiene 2 zugewandten Seite mit einer Tragfläche 18 zur Anlage an die Führungsfläche 6 des Führungsabschnittes 3 der Führungsschiene 2 versehen: Wenn unter einer anliegenden Last der in der Drucktasche 14 aufgebaute hydrostatische Druck nicht ausreichend ist, kommt das Tragelement 1 mit der Tragfläche 18 auf der Führungsschiene 2 zur Anlage. Die Tragfläche ist so ausgelegt, dass ein weiteres Verfahren des Tragelementes 1 auf der Führungsschiene 2 möglich ist. Diese Tragfläche 18 dient als Überlastschutz und kann auch als Fail-Safe-Einrichtung angesehen werden, wenn der hydrostatische Druck völlig zusammenbricht.

Unter dem anliegenden hydrostatischen Druck kann Hydraulikflüssigkeit aus den Drucktaschen 14 austreten. Diese ausgetretene Hydraulikflüssigkeit kann über Rückführkanäle abgeführt werden und in einem externen Reservoir beispielsweise zur weiteren Verwendung erneut aufbereitet werden.

Figur 3 zeigt Rückführkanäle 19, 20. In dieser Abbildung ist ein quer geschnittener Teil des Tragkörpers 10 gemeinsam mit einem quer geschnittenen Teil der Führungsschiene 2 abgebildet. Die beiden Rückführkanäle 19 sind längs der Führungsschiene 2 in von der Basis 13 und den beiden Schenkeln 12 des Tragelementes 1 gebildeten Eckbereichen angeordnet. Diese Rücklaufkanäle 19 sind als offene Nut ausgebildet und an ihren geöffneten Längsseiten von an der Führungsschiene 2 ausgebildeten Abflachungen 21 begrenzt. Diese Abflachungen 21 sind in einem Kantenbereich vorgesehen, der gebildet ist von den seitlichen Führungsflächen 8 und der kopfseitigen Führungsfläche 6 des Führungsabschnittes 3 der Führungsschiene 2.

Das Tragelement 1 ist ferner mit zwei Längsdichtungen 22 versehen, die an den beiden freien Enden der beiden Schenkel 12 angeordnet sind. Die beiden Längsdichtungen 22 liegen an der Führungsschiene 2 an. Die beiden Längsdichtungen 22 sind in der Figur 3 geschnitten abgebildet. Diese Längsdichtungen 22 liegen an einer Anlagefläche 23 der Führungsschiene 2 an. Diese Anlageflächen 23 sind an dem Übergangsabschnitt 5 an dessen einander gegenüberliegenden Längsseiten ausgebildet. Die Anlageflächen 23 schließen an die seitlichen Führungsflächen 8 des Führungsabschnittes 3 und an die seitlichen Fußflächen 9 des Befestigungsabschnittes 4 an. Diese Anlagenflächen 23 können als ebene Fläche ausgebildet sein, sie können jedoch auch konkav gewölbt sein. Diese Anlageflächen 23 bilden Übergangsflächen 24, die an die seitlichen Führungsflächen 8 des Führungsabschnittes 3 und an die seitlichen Fußflächen des Befestigungsabschnittes 4 anschließen. Diese Längsdichtungen 22 begrenzen den bereits erwähnten Rückführungskanal 20. In den Rückführungskanal 20 gelangt Hydraulikflüssigkeit, das aus den an den beiden Schenkeln 12 gebildeten Drucktaschen 14 austritt.

Figur 5 zeigt einen teilweisen Längsschnitt durch die erfindungsgemäße hydrostatische Lagerung. Dieser Abbildung ist zu entnehmen, dass das Kopfstück 11 mit einer Frontdichtung 25 versehen ist, die die Führungsschiene 2 umgreift und an den-seitlichen und an der kopfseitigen Führungsfläche 6, 8 des Führungsabschnittes 3 der Führungsschiene 2 anliegt. Diese Frontdichtung 25 begrenzt zusätzlich dem einen Sammelkanal 26, in dem rückgeführte Hydraulikflüssigkeit aus den Rücklaufkanälen 19, 20 gelangt. Diese rückgeführte Hydraulikflüssigkeit gelangt über den Sammelkanal 26 in die zentrale Rückführungsstelle 27, die an dem Kopfstück 11 vorgesehen ist. Eine hier nicht abgebildete Rohrleitung zum Rückführen der Hydraulikflüssigkeit in ein ebenfalls nicht abgebildetes Reservoir kann an diese zentrale Rückführungsstelle 27 angeschlossen werden.

### Bezugszahlenliste

- 1: Tragelement
- 2: Führungsschiene
- 3: Führungsabschnitt
- 4: Befestigungsabschnitt
- 5: Übergangsabschnitt
- 6: kopfseitige Führungsfläche
- 7: fußseitige Befestigungsflächen
- 8: seitliche Führungsfläche
- 9: seitliche Fußfläche
- 10: Tragkörper
- 11: Kopfstück
- 12: Schenkel
- 13: Basis
- 14: Drucktasche
- 15: Bohrung
- 16: Druckkanal
- 17: Trennsteg
- 18: Tragfläche
- 19: Rücklaufkanal
- 20: Rücklaufkanal
- 21: Abflachung
- 22: Längsdichtung
- 23: Anlagefläche
- 24: Übergangsfläche
- 25: Frontdichtung
- 26: Sammelkanal
- 27: zentrale Rückführungsstelle

## Patentansprüche

1. Hydrostatische Lagerung zur Aufnahme von horizontalen und vertikalen Kräften, mit einer Führungsschiene (2),
- die einen trapezförmigen Führungsabschnitt (3) und einen trapezförmigen Befestigungsabschnitt (4) aufweist, welche Abschnitte mit ihren verjüngten Seiten einander zugewandt sind
- wobei eine kopfseitige Führungsfläche (6) des Führungsabschnittes (4) und eine Befestigungsfläche (7) des Befestigungsabschnittes (4) voneinander abgewandt und parallel zueinander angeordnet sind,
- wobei seitliche Führungsflächen (8) des Führungsabschnittes (3) jeweils unter einem Winkel α zu der kopfseitigen Führungsfläche (6) angeordnet sind,
- und wobei seitliche Fußflächen (9) des Befestigungsabschnittes (4) unter einem Winkel γ zu der Befestigungsfläche (7) angeordnet sind,
- und wobei die seitlichen Führungsflächen (8) des Führungsabschnittes (3) und die seitlichen Fußflächen (9) des Befestigungsabschnittes (4) einen Winkel β einschließen,
und mit einem auf der Führungsschiene hydrostatisch gelagerten Tragelement (1),
- das zwei Schenkel (12) und eine die beiden Schenkel (12) verbindende Basis (13) aufweist, wobei das Tragelelement (1) die Führungsschiene (2) mit den beiden Schenkeln (12) umgreift,
- wobei die beiden Schenkel (12) und die Basis (13) an ihren der Führungsschiene (2) zugewandten Seiten jeweils mit wenigstens einer hydraulisch beaufschlagbaren Drucktasche (14) zum Aufbau eines hydrostatischen Drucks zwischen der Führungsschiene (2) und dem Tragelement (1) versehen sind,
**dadurch gekennzeichnet, dass** der Winkel α zwischen der kopfseitigen und der seitlichen Führungsfläche (6, 8) des Führungsabschnittes (3) gleich oder größer als 35 Grad und gleich oder kleiner als 75 Grad ist, und dass der Winkel γ zwischen der Befestigungsfläche (7) und der seitlichen Fußfläche (9) des Befestigungsabschnittes (4) gleich oder größer als 10 Grad und gleich oder kleiner als 25 Grad ist.

2. Hydrostatische Lagerung nach Anspruch 1, bei der der Winkel α zwischen der kopfseitigen und der seitlichen Führungsfläche (6, 8) des Führungsabschnittes (3) 55 Grad beträgt.

3. Hydrostatische Lagerung nach Anspruch 1, bei der wenigstens die an der Basis (13) des Tragelementes (1) vorgesehene Drucktasche (14) durch einen längs der Führungsschiene (2) angeordneten Trennsteg (17) unterteilt ist.

4. Hydrostatische Lagerung nach Anspruch 3, bei der der Trennsteg (17) an seiner der Führungsschiene (2) zugewandten Seite mit einer Tragfläche (18) zur Anlage an die Führungsfläche (6) des Führungsabschnittes (3) versehen ist

5. Hydrostatische Lagerung nach Anspruch 1, bei der das Tragelement (1) einen mit den Drucktaschen (14) versehenen Tragkörper (1) und zwei an beiden Stirnseiten des Tragkörpers (10) angeordnete Kopfstücke (11) aufweist, wobei an die Drucktaschen (14) anschließende Druckkanäle (16) vorgesehen sind, die mit in wenigstens einem der beiden Kopfstücke (11) vorgesehenen Drosseln zur Regulierung der Durchflussmenge von Hydraulikflüssigkeit versehen sind.

6. Hydrostatische Lagerung nach Anspruch 5, bei der das Tragelement (1) zusätzlich mit Rückführkanälen (19, 20) versehen ist, die in wenigstens einem der beiden Kopfstücke (11) münden, wobei rücklaufende Hydraulikflüssigkeit über eine an dem Kopfstück (11) vorgesehene Rückführungsstelle (27) abgeführt werden kann.

7. Hydrostatische Lagerung nach Anspruch 6, bei der das Tragelement (1) mit zwei längs der Führungsschiene (2) angeordneten Rückführkanälen (19) versehen ist, die jeweils in einem von der Basis (13) und einem der beiden Schenkel (12) des Tragelementes (1) gebildeten Eckbereich angeordnet sind.

8. Hydrostatische Lagerung nach Anspruch 7, bei der der Rückführkanal als offene Nut ausgebildet ist und an seiner geöffneten Längssseite von der Führungsschiene (2) begrenzt ist.

9. Hydrostatische Lagerung nach Anspruch 8, bei der der Führungsabschnitt (3) der Führungsschiene (2) in einem von seiner seitlichen Führungsfläche (8) und seiner kopfseitigen Führungsfläche (6) gebildeten Kantenbereich eine entlang der Führungsschiene erstreckte Abflachung (21) aufweist, die den Rückführkanal (19) begrenzt.

10. Hydrostatische Lagerung nach Anspruch 1, bei der das Tragelement (1) an den freien Enden der beiden Schenkel (12) jeweils mit einer Längsdichtung (22) versehen ist, die an der Führungsschiene (2) anliegt.

11. Hydrostatische Lagerung nach Anspruch 10, bei der die Längsdichtung (22) einen Rückführkanal (20) begrenzt.

12. Hydrostatische Lagerung nach Anspruch 5, bei der das Kopfstück (11) mit einer Frontdichtung (25) versehen ist, die die Führungsschiene (2) umgreift.

13. Hydrostatische Lagerung nach Anspruch 12, bei der die Frontdichtung (25) einen Sammelkanal (26) begrenzt, über den Hydraulikflüssigkeit aus den Rücklaufkanälen (19, 20) in eine zentrale Rückführungsstelle (27) des Kopfstückes (11) geleitet wird.

14. Hydrostatische Lagerung nach Anspruch 1, bei der zwischen dem trapezförmigen Führungsabschnitt (3) und dem trapezförmigen Befestigungsabschnitt (4) ein Übergangsabschnitt (5) vorgesehen ist, der den Befestigungsabschnitt (4) einstückig mit dem Führungsabschnitt (3) verbindet.

15. Hydrostatische Lagerung nach Anspruch 14, bei der der Übergangsabschnitt (5) an seinen einander gegenüberliegenden Längsseiten mit geraden oder konkav gekrümmten Übergangsflächen (24) versehen ist, die an die seitlichen Führungsflächen (8) des Führungsabschnittes (3) und an die seitlichen Fußflächen (9) des Befestigungsabschnittes (4) anschließen.

16. Hydrostatische Lagerung nach Anspruch 14, bei der die Übergangsflächen (24) als Anlagefläche (23) für Längsdichtungen (22) des Tragelementes (1) ausgebildet sind.

## Claims

1. Hydrostatic bearing for absorbing horizontal and vertical forces, having a guide rail (2)
- which has a trapezoidal guide section (3) and a trapezoidal fastening section (4), said sections facing one another with their narrowed sides,
- wherein a top-side guide surface (6) of the guide section (3) and a fastening surface (7) of the fastening section (4) face away from one another and are arranged parallel to one another,
- wherein lateral guide surfaces (8) of the guide section (3) are each arranged at an angle α to the top-side guide surface (6),
- and wherein lateral foot surfaces (9) of the fastening section (4) are arranged at an angle y to the fastening surface (7),
- and wherein the lateral guide surfaces (8) of the guide section (3) and the lateral foot surfaces (9) of the fastening section (4) enclose an angle β,
and having a support element (1) mounted hydrostatically on the guide rail,
- said support element (1) having two limbs (12) and a base (13) connecting the two limbs (12), wherein the support element (1) engages around the guide rail (2) by way of the two limbs (12),
- wherein the two limbs (12) and the base (13) are each provided on their sides facing the guide rail (2) with at least one pressure pocket (14) that can be acted on hydraulically in order to build up a hydrostatic pressure between the guide rail (2) and the support element (1),
**characterized in that** the angle α between the top-side and lateral guide surfaces (6, 8) of the guide section (3) is equal to or greater than 35 degrees and equal to or less than 75 degrees, and **in that** the angle γ between the fastening surface (7) and the lateral foot surface (9) of the fastening section (4) is equal to or greater than 10 degrees and equal to or less than 25 degrees.

2. Hydrostatic bearing according to Claim 1, wherein the angle α between the top-side and lateral guide surfaces (6, 8) of the guide section (3) is 55 degrees.

3. Hydrostatic bearing according to Claim 1, wherein at least the pressure pocket (14) provided on the base (13) of the support element (1) is subdivided by a separating web (17) arranged along the guide rail (2).

4. Hydrostatic bearing according to Claim 3, wherein the separating web (17) is provided on its side facing the guide rail (2) with a support surface (18) for abutment against the guide surface (6) of the guide section (3).

5. Hydrostatic bearing according to Claim 1, wherein the support element (1) has a support body (10) provided with the pressure pockets (14) and two top pieces (11) arranged on the two end sides of the support body (10), wherein pressure ducts (16) adjoining the pressure pockets (14) are provided, said pressure ducts (16) being provided with restrictors, provided in at least one of the two top pieces (11), for regulating the flow rate of hydraulic fluid.

6. Hydrostatic bearing according to Claim 5, wherein the support element (1) is additionally provided with return ducts (19, 20) which open into at least one of the two top pieces (11), wherein returning hydraulic fluid can be drained via a return point (27) provided on the top piece (11).

7. Hydrostatic bearing according to Claim 6, wherein the support element (1) is provided with two return ducts (19) arranged along the guide rail (2), said return ducts (19) each being arranged in a corner region formed by the base (13) and one of the two limbs (12) of the support element (1).

8. Hydrostatic bearing according to Claim 7, wherein the return duct is in the form of an open groove and is bounded by the guide rail (2) on its open longitudinal side.

9. Hydrostatic bearing according to Claim 8, wherein the guide section (3) of the guide rail (2) has, in an edge region formed by its lateral guide surface (8) and its top-side guide surface (6), a flattened portion (21) extending along the guide rail, said flattened portion (21) bounding the return duct (19).

10. Hydrostatic bearing according to Claim 1, wherein the support element (1) is provided, at the free ends of the two limbs (12), in each case with a longitudinal seal (22) which butts against the guide rail (2).

11. Hydrostatic bearing according to Claim 10, wherein the longitudinal seal (22) bounds a return duct (20).

12. Hydrostatic bearing according to Claim 5, wherein the top piece (11) is provided with a front seal (25) which engages around the guide rail (2).

13. Hydrostatic bearing according to Claim 12, wherein the front seal (25) bounds a collecting duct (26) via which hydraulic fluid is guided from the return ducts (19, 20) into a central return point (27) of the top piece (11).

14. Hydrostatic bearing according to Claim 1, wherein a transition section (5) is provided between the trapezoidal guide section (3) and the trapezoidal fastening section (4), said transition section (5) connecting the fastening section (4) integrally to the guide section (3).

15. Hydrostatic bearing according to Claim 14, wherein the transition section (5) is provided, at its mutually opposite longitudinal sides, with straight or concavely curved transition surfaces (24) which adjoin the lateral guide surfaces (8) of the guide section (3) and the lateral foot surfaces (9) of the fastening section (4).

16. Hydrostatic bearing according to Claim 14, wherein the transition sections (24) are in the form of an abutment surface (23) for longitudinal seals (22) of the support element (1).

## Revendications

1. Palier hydrostatique destiné à recevoir des forces horizontales et verticales, comprenant un rail de guidage (2),
- qui comprend une section de guidage trapézoïdale (3) et une section de fixation trapézoïdale (4), les côtés effilés desquelles sections étant situés en regard les uns des autres,
- une surface de guidage côté tête (6) de la section de guidage (4) et une surface de fixation (7) de la section de fixation (4) étant disposées de manière opposée l'une à l'autre et de manière parallèle l'une à l'autre,
- des surfaces de guidage latérales (8) de la section de guidage (3) étant respectivement disposées suivant un angle α par rapport à la surface de guidage côté tête (6),
- des surfaces de base latérales (9) de la section de fixation (4) étant disposées suivant un angle γ par rapport à la surface de fixation (7),
- et les surfaces de guidage latérales (8) de la section de guidage (3) et les surface de base latérales (9) de la section de fixation (4) formant un angle β,
et comprenant un élément de support (1) monté de manière hydrostatique sur le rail de guidage,
- lequel élément de support comprend deux branches (12) et une base (13) reliant les deux branches (12), l'élément de support (1) venant en prise autour du rail de guidage (2) à l'aide des deux branches (12),
- les deux branches (12) et la base (13) étant respectivement pourvues, sur leurs côtés en regard du rail de guidage (2), d'au moins une poche de pression (14) pouvant être sollicitée de manière hydraulique, pour l'établissement d'une pression hydrostatique entre le rail de guidage (2) et l'élément de support (1),
**caractérisé en ce que** l'angle α entre les surfaces de guidage côté tête et latérales (6, 8) de la section de guidage (3) est supérieur ou égal à 35 degrés et inférieur ou égal à 75 degrés, et **en ce que** l'angle γ entre la surface de fixation (7) et la surface de base latérale (9) de la section de fixation (4) est supérieur ou égal à 10 degrés et inférieur ou égal à 25 degrés.

2. Palier hydrostatique selon la revendication 1, dans lequel l'angle α entre les surfaces de guidage côté tête et latérales (6, 8) de la section de guidage (3) vaut 55 degrés.

3. Palier hydrostatique selon la revendication 1, dans lequel au moins la poche de pression (14) prévue sur la base (13) de l'élément de support (1) est divisée par une nervure de séparation (17) disposée le long du rail de guidage (2).

4. Palier hydrostatique selon la revendication 3, dans lequel la nervure de séparation (17) est pourvue, sur son côté en regard du rail de guidage (2), d'une surface de support (18) pour l'appui contre la surface de guidage (6) de la section de guidage (3).

5. Palier hydrostatique selon la revendication 1, dans lequel l'élément de support (1) comprend un corps de support (10) pourvu des poches de pression (14) et deux pièces de tête (11) disposées sur les deux côtés frontaux du corps de support (10), des canaux de pression (16) se raccordant aux poches de pression (14) étant prévus, lesquels canaux de pression sont pourvus d'étranglements, prévus dans au moins l'une des deux pièces de tête (11), pour la régulation du débit de liquide hydraulique.

6. Palier hydrostatique selon la revendication 5, dans lequel l'élément de support (1) est en outre pourvu de canaux de retour (19, 20) qui débouchent dans au moins l'une des deux pièces de tête (11), le liquide hydraulique de retour pouvant être évacué au moyen d'un point de retour (27) prévu sur la pièce de tête (11).

7. Palier hydrostatique selon la revendication 6, dans lequel l'élément de support (1) est pourvu de deux canaux de retour (19) disposés le long du rail de guidage (2), lesquels canaux de retour sont disposés respectivement dans une région de coin formée par la base et l'une des deux branches (12) de l'élément de support (1).

8. Palier hydrostatique selon la revendication 7, dans lequel le canal de retour est réalisé sous forme de rainure ouverte et est limité, au niveau de son côté longitudinal ouvert, par le rail de guidage (2).

9. Palier hydrostatique selon la revendication 8, dans lequel la section de guidage (3) du rail de guidage (2) comprend, dans une région de bord formée par sa surface de guidage latérale (8) et sa surface de guidage côté tête (6), un aplatissement (21) s'étendant le long du rail de guidage, lequel aplatissement limite le canal de retour (19).

10. Palier hydrostatique selon la revendication 1, dans lequel l'élément de support (1) est pourvu, au niveau des extrémités libres des deux branches (12), d'un joint d'étanchéité longitudinal (22) respectif qui s'applique contre le rail de guidage (2).

11. Palier hydrostatique selon la revendication 10, dans lequel le joint d'étanchéité longitudinal (22) limite un canal de retour (20).

12. Palier hydrostatique selon la revendication 5, dans lequel la pièce de tête (11) est pourvue d'un joint d'étanchéité avant (25) qui vient en prise autour du rail de guidage (2).

13. Palier hydrostatique selon la revendication 12, dans lequel le joint d'étanchéité avant (25) limite un canal collecteur (26) au moyen duquel du liquide hydraulique est guidé hors des canaux de retour (19, 20) dans un point de retour central (27) de la pièce de tête (11).

14. Palier hydrostatique selon la revendication 1, dans lequel une section de transition (5) est prévue entre la section de guidage trapézoïdale (3) et la section de fixation trapézoïdale (4), laquelle section de transition relie d'un seul tenant la section de fixation (4) à la section de guidage (3).

15. Palier hydrostatique selon la revendication 14, dans lequel la section de transition (5) est pourvue sur ses côtés longitudinaux opposés de surfaces de transition (24) rectilignes ou de courbure concave qui se raccordent aux surfaces de guidage latérales (8) de la section de guidage (3) et aux surfaces de base latérales (9) de la section de fixation (4).

16. Palier hydrostatique selon la revendication 14, dans lequel les surfaces de transition (24) sont réalisées sous forme de surface d'appui (23) pour des joints d'étanchéité longitudinaux (22) de l'élément de support (1).
